# EUROPEAN PATENT APPLICATION

(11) **EP 2 573 555 A1**
(43) Date of publication of application: **27.03.2013**
(21) Application number: 12181199.6
(22) Date of filing: 21.08.2012
(51) Int. Cl.: G01N 29/04, G01N 29/44, G01N 29/06

(54) **Ultrasonic inspection method and ultrasonic inspection apparatus**

(30) Priority: 20.09.2011 JP 2011204064; 26.06.2012 JP 2012142591
(71) Applicant: Hitachi Ltd., Tokyo 100-8280 (JP)
(72) Inventor: Kitazawa, So, Chiyoda-ku, Tokyo 100-8220 (JP); Kono, Naoyuki, Chiyoda-ku, Tokyo 100-8220 (JP); Baba, Atsushi, Chiyoda-ku, Tokyo 100-8220 (JP)
(74) Representative: MERH-IP Matias Erny Reichl Hoffmann

(57) **Abstract**

An ultrasonic inspection method and an ultrasonic inspection apparatus are provided, in which bending of a propagation path of an inspection object (100) in three dimensions is considered. The ultrasonic inspection method includes calculating the ultrasonic propagation path by using three-dimensional shape data (405) of the inspection object (101) and information relating to a position and a direction of an ultrasonic sensor (101), giving spatial coordinates along the calculated ultrasonic propagation path to each point of sound field intensity data of an ultrasonic wave received in time series by the ultrasonic sensor (101), and displaying ultrasonic inspection data obtained by using the sound field intensity data and the spatial coordinates.

## Description

### BACKGROUND OF THE INVENTION

### 1. Field of the Invention

The present invention relates to an ultrasonic inspection method as a type of nondestructive inspection technique, and particularly to an ultrasonic inspection method and an ultrasonic inspection apparatus in which an array-probe ultrasonic sensor is used.

### 2. Background of the Invention

In recent years, an ultrasonic inspection method, in which the inside of an inspection object is imaged with high precision and in a short time, is developed(see, for example, Collectively written by Michimasa Kondo, Yoshimasa Ohasi and Akio Sanemori, Digital Signal Processing Series Vol. 12, "DIGITAL SIGNAL PROCESSING IN MEASUREMENT•SENSOR", pp. 143-186, May 20, 1993, issued by Shokodo (non-patent literature 1)). For example, there is a phased array method.

The phased array method uses a so-called array-probe ultrasonic sensor in which plural piezoelectric vibrators are arranged. The phased array method is based on the principle that ultrasonic wavefronts transmitted from the respective piezoelectric vibrators interfere with each other and propagate while a synthetic wavefront is created. Accordingly, the incident angle and focused position of the synthetic wavefront can be controlled by controlling delay times of ultrasonic transmission timings of the respective piezoelectric vibrators.

Besides, also when an ultrasonic wave is received, similarly to the time of transmission, the reception incident angle of the ultrasonic wave can be controlled or the focused ultrasonic wave can be received by shifting and adding reflected ultrasonic waves received by the respective piezoelectric vibrators.

As the phased array method, there are generally known a linear scan system in which piezoelectric vibrators of a one-dimensional sensor array are linearly scanned, and a sector scan system in which transmission and reception directions of ultrasonic waves are changed in a fan shape. Besides, if a two-dimensional array sensor in which piezoelectric vibrators are arranged in a lattice form is used, focus can be placed on a three-dimensionally arbitrary position, and a three-dimensional scan system adapted to an inspection object becomes possible. In any system, the ultrasonic wave can be scanned at high speed without moving the ultrasonic sensor, or the incident angle of the ultrasonic wave and the position of the focused depth can be arbitrarily controlled without exchanging the ultrasonic sensor.

In the phased array method using a sensor in which plural piezoelectric vibrators are arranged, a reflected ultrasonic signal of a defect (hereinafter referred to as measured waveform data) can be three-dimensionally acquired even if the sensor is not moved. However, in order to specify a three-dimensional reflected position from the measured waveform data, estimation is performed from the plural two-dimensional image of reflection intensity distributions different in spatial position, or estimation is performed by performing three-dimensional display after reflection intensity distributions are converted into three-dimensional data.

For example, in the case of the linear scan or the sector scan of the phased array method, since plural two-dimensional reflection intensity images corresponding to known scan pitches can be acquired, the direction in which the reflected wave appears can be specified by sequentially changing and displaying the images on the screen. However, this method is limited for an arbitrary three-dimensional scan other than the above.

In such a case, by recent development of a calculator, a technique becomes possible in which measured waveform data from plural directions are subjected to an interpolation process or the like to form three-dimensional lattice-like data (hereinafter referred to as three-dimensional inspection data), and this is image-displayed by a method such as volume rendering or surface rendering. Besides, there is a method in which conversion into lattice-like data is not performed, and an image is displayed as a three-dimensional dot group. In any case, since the data is stored as the three-dimensional inspection data, an inspector can confirm in an arbitrary direction after measurement (see, for example, Atsushi Baba, Satoshi Kitazawa, Naoyuki Kono, Yuji Adachi, Mitsuru Odakura and Osamu Kikuchi: "DEVELOPMENT OF THREE-DIMENSIONAL ULTRASONIC INSPECTION SYSTEM "3D Focus-UT"", Nihon Hozen Gakkai, Fifth Academic Lecture Outline Collection, 155 (2008) (non-patent literature 2)). Hereinafter, this method is called a three-dimensional phased array method.

However, also in the three-dimensional phased array method, it is difficult to determine from only the three-dimensional inspection data whether the reflected ultrasonic signal is based on reflection at an end face of an inspection object or an interface, or is based on reflection due to a defect. Especially, in the case of an inspection object having a complicated shape, since many reflected ultrasonic signals (inner-wall echo) dependent on the shape appear, discrimination is difficult even for an expert. Thus, software is developed in which the three-dimensional shape data of the inspection object, together with the three-dimensional inspection data, is displayed. If the two data are overlapped and compared with each other, the discrimination between the inner-wall echo and the reflected ultrasonic signal (defect echo) from the defect becomes easy. As the three-dimensional shape data, data generated by general-purpose CAD (Computer Aided Design) is often read and used (see, for example, non-patent literature 2 and Potts, A.; McNab. A.; Reilly, D.; Toft, M., "Presentation and analysis enhancements of the NDT Workbench a software package for ultrasonic NDT data", REVIEW OF PROGRESS IN QUANTITATIVE NONDESTRUCTIVE EVALUATION; Volume 19. AIP Conference Proceedings, Volume 509, pp. 741-748 (2000) (non-patent literature 3), and JP-A-2009-288129 (patent literature 1)). Hereinafter, the display in which the three-dimensional inspection data is fused with the shape data and is displayed is called CAD fusion three-dimensional display.

Berke M; Ballenger, T. "Phased array technology for standard ultrasonic testing", Insight: Volume 48, pp. 218-220 (2006) (non-patent literature 4) discloses a two-dimensional display in which consideration is given to the bending of an ultrasonic propagation path due to shape.

In general, the image display of inspection data in the phased array method is performed by using a refractive angle and a path length at an ultrasonic incident point and under the assumption that the ultrasonic wave linearly propagates. A sector image obtained by sector scan is a typical example. However, in general, since an ultrasonic wave propagates while reflection and refraction are repeated many times in a material, when shape data and inspection data are overlapped and displayed, bending of the propagation path is needed to be considered in the display at the inspection data side. Otherwise, respective reflected signals in the inspection data are displayed at positions irrelevant to the shape data except for a signal caused by direct reflection. In the above technique, although the bending of the two-dimensional ultrasonic propagation path is considered, the bending of the three-dimensional ultrasonic propagation path is not considered.

### SUMMARY OF INVENTION

An object of the invention is to provide an ultrasonic inspection method and an ultrasonic inspection apparatus, in which bending of a propagation path of an inspection object in three dimensions is considered.

The object is achieved by an ultrasonic inspection method including calculating an ultrasonic propagation path by using three-dimensional shape data of an inspection object and information relating to a position and a direction of an ultrasonic sensor, giving spatial coordinates along the calculated ultrasonic propagation path to each point of sound field intensity data of an ultrasonic wave received in time series by the ultrasonic sensor, and/or displaying ultrasonic inspection data obtained by using the sound field intensity data and the spatial coordinates, and is achieved by an apparatus for performing the method.

By the above configuration, the ultrasonic inspection method and the ultrasonic inspection apparatus can be provided, in which the bending of the propagation path of the inspection object in the three dimensions is considered.

### BRIEF DESCRIPTION OF DRAWINGS

FIG. 1 is a structural view showing example 1 of an ultrasonic inspection method and an ultrasonic inspection apparatus of the invention.
FIG. 2 is a view for explaining a scan method for obtaining inspection data in example 1 of the invention.
FIG. 3 is a view for explaining a scan method for obtaining inspection data in example 1 of the invention.
FIG. 4 is a conceptual view for explaining a correction method of an ultrasonic propagation path in example 1 of the invention.
FIG. 5 is a view for explaining CAD fusion three-dimensional display when the ultrasonic propagation path is not corrected in example 1 of the invention.
FIG. 6 is a view for explaining CAD fusion three-dimensional display when the ultrasonic propagation path is corrected in example 1 of the invention.
FIG. 7 is a flowchart for explaining a series of processes in example 1 of the invention.
FIG. 8 is a view for explaining an ultrasonic propagation analysis method in example 2 of the invention.
FIG. 9 is a view for explaining the ultrasonic propagation analysis method in example 2 of the invention.

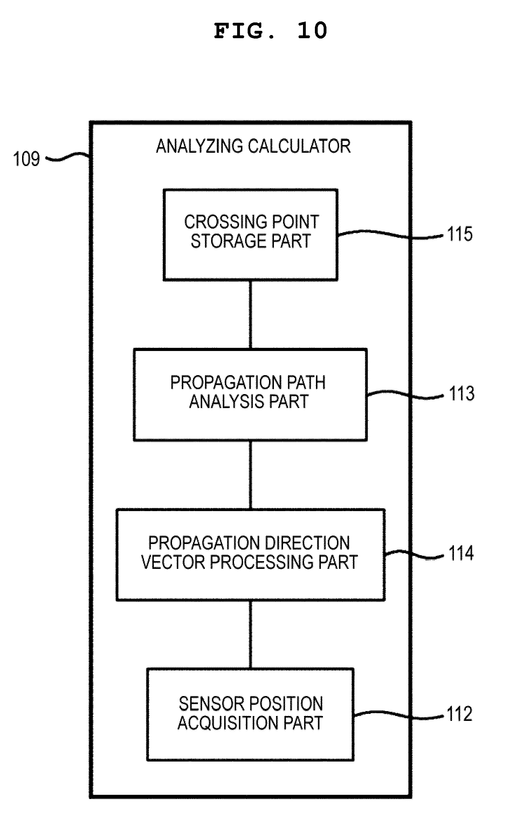

FIG. 10 is a structural view showing example 2 of an ultrasonic inspection method and an ultrasonic inspection apparatus of the invention.
FIG. 11 is a view showing reflection coefficients of a longitudinal wave and a transverse wave in a steel member.
FIG. 12 is a view showing propagation paths of the longitudinal wave and the transverse wave in the steel member.

### DESCRIPTION OF EMBODIMENTS

Hereinafter, an ultrasonic inspection method and an ultrasonic inspection apparatus of the invention will be described in detail with reference to the drawings.

### Example 1

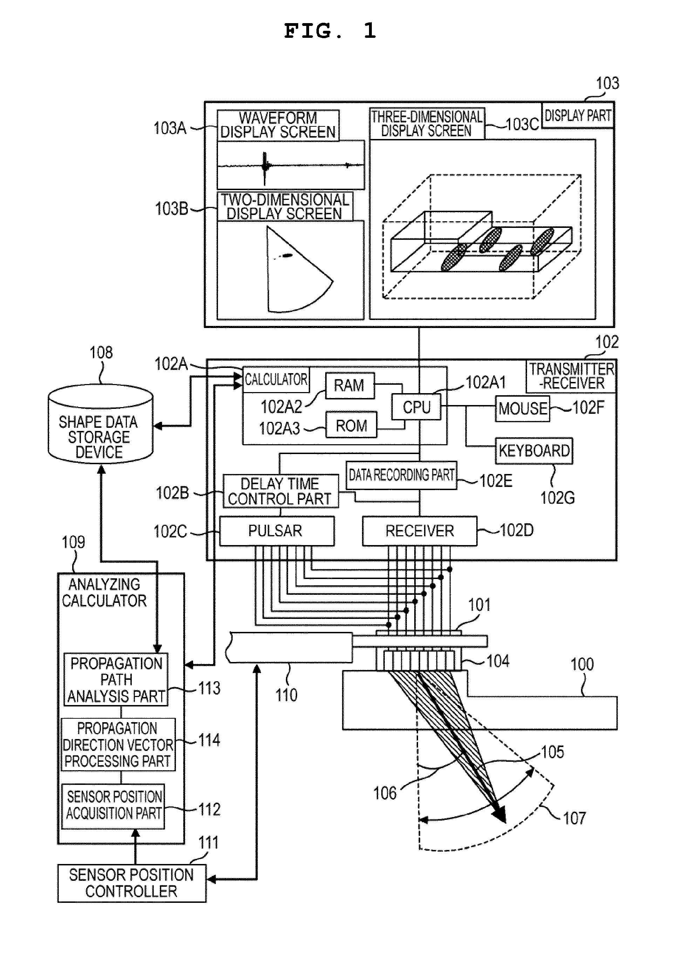

FIG. 1 shows example 1 which includes an inspection object 100, an array-probe ultrasonic sensor 101 to irradiate an ultrasonic wave thereto, a transmitter-receiver 102, and a display part 103 to display a reception signal and an inspection image.

Here, first, as shown in the drawing, the array-probe ultrasonic sensor 101 is basically composed of plural piezoelectric vibrators 104 to generate and receive ultrasonic waves. The sensor is installed on an inspection surface of the inspection object 100, and then functions to generate an ultrasonic beam 105 by a drive signal supplied from the transmitter-receiver 102, to propagate the beam into the inspection object 100, to detect a reflected wave generated by this, and to input a reception signal to the transmitter-receiver 102. In the drawing, although the array-probe ultrasonic sensor 101 directly contacts the inspection object 100, the sensor may contact the inspection object 100 through a wedge which changes an incident angle of the ultrasonic beam 105 and is made of a material through which an ultrasonic wave passes.

The array-probe ultrasonic sensor 101 is fixed by a fixing tool 110, and the position and direction of the fixing tool 110 is controlled by a sensor position controller 111. The information relating to the position and direction of the array-probe ultrasonic sensor 101 is sequentially transmitted from the sensor position controller 111 to an analyzing calculator 109, and is used as a parameter for ultrasonic propagation analysis. Since the parameter of the position and direction relating to the incidence of the ultrasonic wave is required in order to display a three-dimensional image, the information from the position controller is needed. Incidentally, although the movement of the sensor position may be automatically controlled or manually controlled, if the automatic control is performed, continuous inspection with higher precision can be performed. The details of the ultrasonic propagation analysis will be described later.

The analyzing calculator 109 includes a sensor position acquisition part 112 to acquire the information relating to the position and direction from the sensor position controller 111. A propagation direction vector processing part 114 uses the position information from the sensor position acquisition part 112 or the information of the reflection point of the ultrasonic wave and obtains a direction vector in which the ultrasonic wave propagates. A propagation path analysis part 113 uses CAD data of a shape data storage device 108 and the position information and the direction vector in the sensor position acquisition part, and analyzes a propagation path of the ultrasonic wave on shape data and obtains the spatial coordinates of the propagation path. Actually, the coordinates are obtained by repeating the crossing decision. The spatial coordinates of the propagation path of the ultrasonic wave obtained by the propagation path analysis part 113 is transmitted to a calculator 102A. The calculator 102A performs a correction process on the recorded inspection data, generates inspection data in view of the bending of the inspection object, and transmits the data to the display part.

The transmitter-receiver 102 performs transmission and reception of an ultrasonic wave by the array-probe ultrasonic sensor 101, and includes the calculator 102A, a delay time control part 102B, a pulsar 102C, a receiver 102D, and a data recording part 102E. The pulsar 102C supplies a drive signal to the array-probe ultrasonic sensor 101, and the receiver 102D processes a reception signal inputted from the array-probe ultrasonic sensor 101 by this.

The calculator 102A basically includes a CPU 102A1, a RAM 102A2 and a ROM 102A3. A program to control the CPU 102A1 is written in the ROM 102A3. The CPU 102A1 performs an arithmetic process while reading required external data from the data recording part 102E in accordance with this program, or transmitting and receiving data to and from the RAM 102A2, and outputs the processed data to the data recording part 102E when necessary.

Besides, the CPU 102A1 controls the delay time control part 102B, the pulsar 102C and the receiver 102D, so that a required operation is obtained. First, the delay time control part 102B controls both the timing of the drive signal outputted from the pulsar 102C and the input timing of the reception signal of the receiver 102D, so that the operation of the array-probe ultrasonic sensor 101 based on the phased array system is obtained.

The operation of the array-probe ultrasonic sensor 101 based on the phased array system is an operation of controlling a focus depth and an incident angle 106 of the ultrasonic beam 105 and transmitting and receiving an ultrasonic wave. By this, the reception signal is supplied from the receiver 102D to the data recording part 102E.

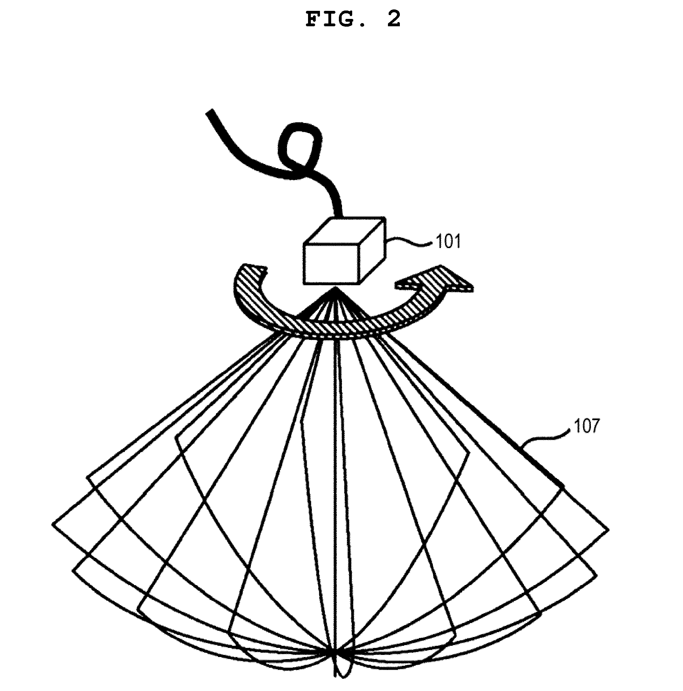

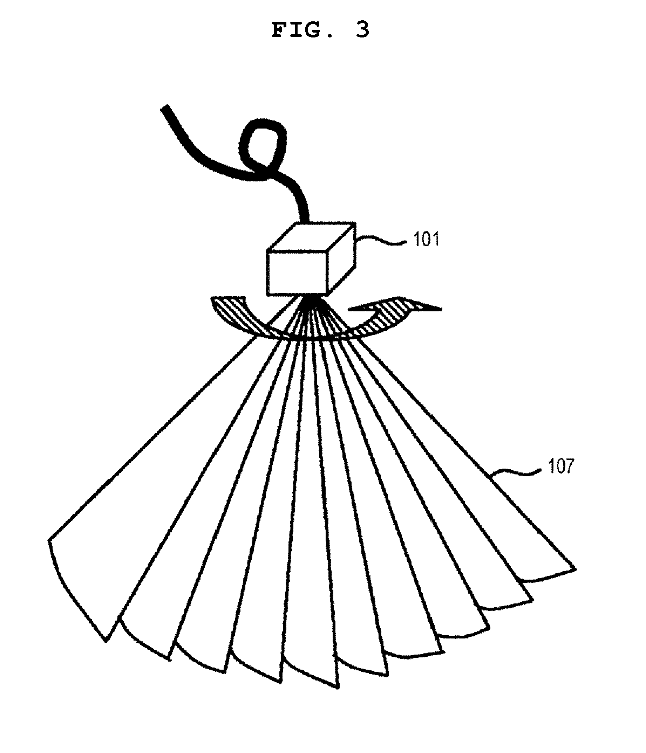

As described before, in the phased array system, various scans can be performed by changing the delay time. In the case where two-dimensional inspection data is acquired, there is well-known a linear scan system in which the ultrasonic beam 105 is moved in parallel, or a sector scan system in which the ultrasonic beam 105 is moved in a shape of a sector 107. In the case of three-dimensional inspection data, for example, there is a scan system in which as shown in FIG. 2, the sector 107 is made a basic unit, and the sector 107 is made to make one rotation around the center shaft, or a scan system in which as shown in FIG. 3, the sector 107 is swung like a fan. Although not shown, in addition to this, various scan systems can be set according to the shape of the inspection object 100.

The signal received in such a scan system is sent to the data recording part 102E, and is recorded as recorded data, and is simultaneously sent to the calculator 102A. By this, the calculator 102A synthesizes waveforms obtained by the respective piezoelectric vibrators according to the delay time, performs an appropriate interpolation process on the waveforms at respective incident angles of the ultrasonic waves, generates pixel format two-dimensional inspection data in which a two-dimensional tetragonal lattice called a pixel is used as a unit or voxel format three-dimensional inspection data in which three-dimensional cubic lattice called a voxel is used as a unit, makes a picture of the data, and causes the display part 103 to display it.

If the CAD data of the inspection object 100 exists as three-dimensional shape data, this is read from the outside of the calculator 102A, and CAD fusion three-dimensional display can be performed. The CAD data is stored in the shape data storage device 108. The format of the CAD data is a data format in which input and output can be performed by commercially available CAD software. For example, STL (STereo Lithography or Standard Triangulated Language) format is used in which reading and outputting can be performed by many CAD software. In the STL format, a surface of an object is represented by a set of many triangles, and surface normal vectors of the triangles and coordinate values of three apexes are written in the STL file. The display of three-dimensional shape data from the STL format file by using graphics API can be easily realized by drawing plural triangles.

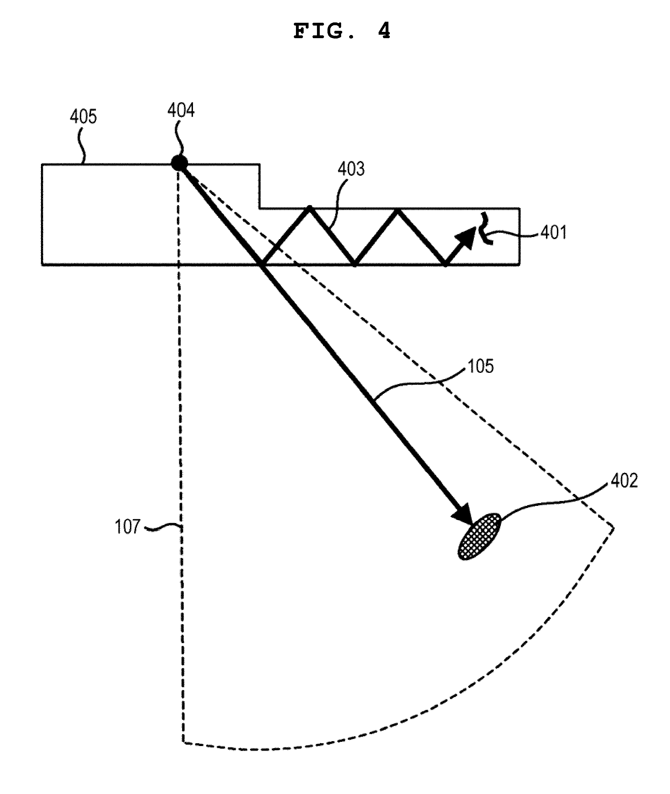

Here, at the CAD fusion three-dimensional display, when the pixel format two-dimensional inspection data or the voxel format three-dimensional inspection data is generated, bending correction of an ultrasonic propagation path for the internal reflection of the inspection object 100 is required to be performed for respective sampling points of the recorded data. The concept of the bending correction will be described with reference to FIG. 4. FIG. 4 is a conceptual view when correction of the typical ultrasonic beam 105 is performed for three-dimensional shape data 405.

As stated above, in the normal phased array method, a refraction angle at an ultrasonic incident point 404 and a path length are used and drawing is performed under the assumption that the ultrasonic wave linearly propagates. Thus, for example, an image is formed as a fan like the sector 107 of FIG. 4. Further, since bending of an ultrasonic propagation path caused by internal reflection is not considered, for example, reflection due to a crack 401 is displayed as a signal 402 in the sector 107 on the outside of the three-dimensional shape data 405. However, if respective sampling points of recorded data are arranged like a propagation path 403, the signal 402 is displayed in the vicinity of the crack 401.

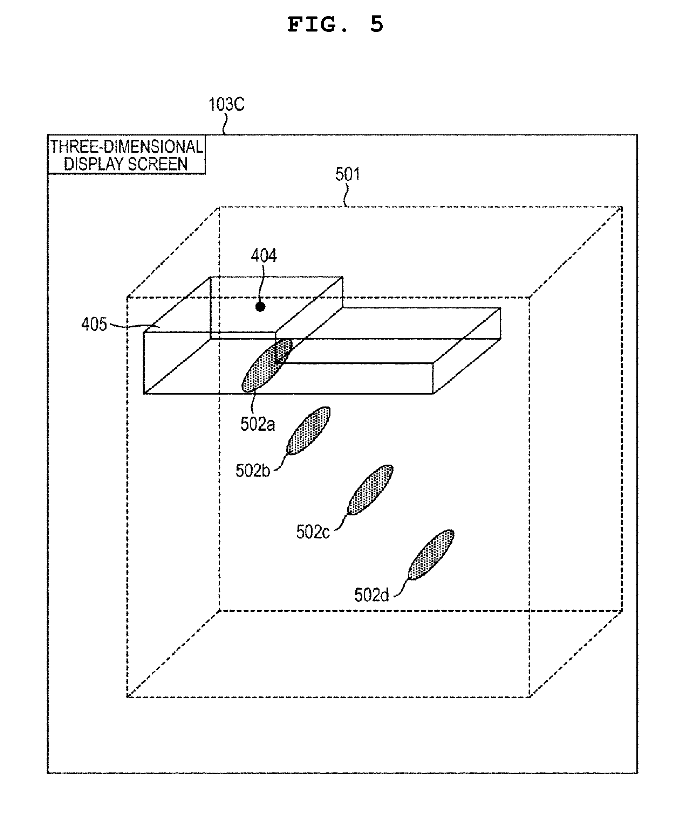

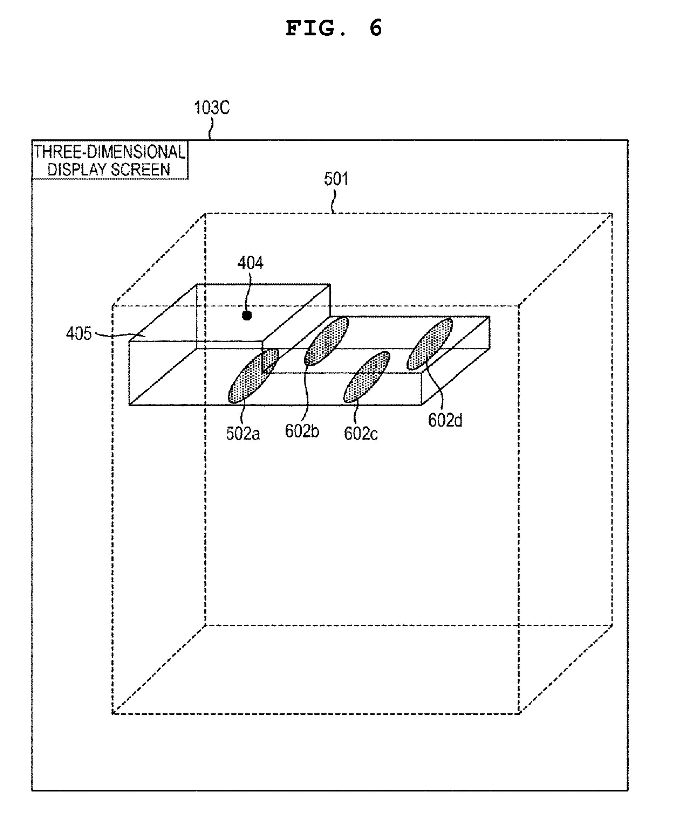

The process as stated above is performed for all ultrasonic beams used in the scan, so that the inspection data in which the three-dimensional shape data 405 correspond to the positions of the respective reflection signals can be obtained. For example, FIG. 5 shows a state of CAD fusion three-dimensional display before the propagation path correction is performed. Internal reflection signals 502a, 502b, 502c and 502d contained in three-dimensional inspection data are displayed on the outside of the three-dimensional shape data 405 except for the inner reflection signal 502a due to direct reflection. However, in CAD fusion three-dimensional display after the propagation path correction shown in FIG. 6, the inner reflection signal 502b, the inner reflection signal 502c and the inner reflection signal 502d are displayed as inner reflection signal 602b, inner reflection signal 602c and inner reflection signal 603d at corresponding positions in the three-dimensional shape data 405. The correction process is performed on the ultrasonic inspection data by using the ultrasonic propagation path, so that the respective reflection signals contained in the three-dimensional inspection data are displayed at the respective reflection positions where consideration is given to the bending on the shape data.

The inspection data obtained by the calculator 102A in this way is displayed on the display part 103. The display part 103 includes a two-dimensional display screen 103B to display two-dimensional inspection data, a three-dimensional display screen 103C to display three-dimensional inspection data, and a waveform display screen 103A to display waveform signals of the respective piezoelectric vibrators. Besides, although FIG. 1 shows only one display part 103, the waveform display screen 103A, the two-dimensional display screen 103B, and the three-dimensional display screen 103C may be separately displayed by plural display parts.

Although the CAD fusion three-dimensional display is displayed on the three-dimensional display screen 103C on the display part 103 as shown in FIG. 6, at this time, a display can be performed with an arbitrary display size by input using a mouse 102F or a keyboard 102G connected to the calculator 102A. Further, display color and transparency can be arbitrarily changed by the input from the mouse 102F or the keyboard 102G. The display color can be changed according to the reflection intensity. In this case, plural display color patterns are prepared, and an inspector can select according to the use.

Incidentally, the three-dimensional drawing algorism is realized in, for example, a library, such as OpenGL (registered trademark) or DirectX (registered trademark), which is an industry standard graphics application programming interface (graphics API) for graphics applications. If the graphics API is used in the program and necessary information, such as the shape of an object to be displayed, viewpoint and display position, is given, a three-dimensional shape can be easily drawn at an arbitrary position on the three-dimensional display screen 103C and with an arbitrary color, transparency and size.

Besides, the inspector can arbitrarily change the display color and transparency of the three-dimensional shape data 405 by input using the mouse 102F or the keyboard 102G. Further, the inspector can perform parallel movement or rotation movement of the three-dimensional shape data 405 to an arbitrary position by inputting numerical values from the keyboard 102G or by dragging on the three-dimensional display screen 103C with the mouse 102F. Besides, since the inspector can switch between display and non-display when necessary, even if the three-dimensional shape data 405 and the three-dimensional inspection data 501 overlap with each other, the display can be changed so that the data are easily viewable for the inspector.

Besides, the inspector can display an image obtained by cutting the three-dimensional shape data 405 and the three-dimensional inspection data 501 at the same position by input using the mouse 102F or the keyboard 102G. On the cut surface, the color and thickness of the contour line of the three-dimensional shape data 405 are changed, stressed and displayed. By this, evaluation at a specific two-dimensional section becomes easy.

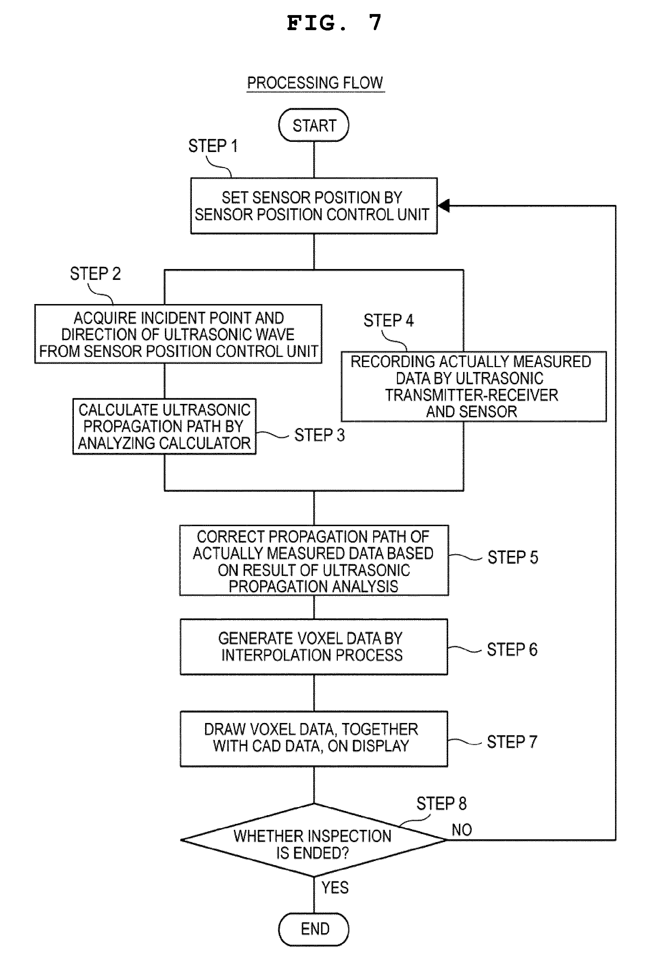

Here, a process of automatically and continuously performing steps from recording of measurement data to CAD fusion three-dimensional display according to the invention will be described with reference to FIG. 7. In the case of an off line process, a propagation path correction and a conversion process are required to be performed after all data are acquired, and it takes labor and time for inspection. By automatically and continuously performing the process, the ultrasonic inspection method and the ultrasonic inspection apparatus are realized, in which discrimination between an inner-wall echo and a defect echo is easy, and a three-dimensional area of an inspection object can be inspected at high speed while the sensor is moved.

The array-probe ultrasonic sensor 101 fixed to the fixing tool 110 is controlled by the sensor position controller 111, and records the reflected ultrasonic signal while mechanically moving. First, the array-probe ultrasonic sensor 101 is set at a first measurement position (step 1).

At this time, information (hereinafter referred to as ultrasonic incident information) relating to the incident point and incident direction of an ultrasonic wave at the first measurement position is transmitted from the sensor position controller 111 to the analyzing calculator 109. For example, the incident point is given by orthogonal coordinates intrinsic to the sensor position controller 111, and the incident direction is given by an elevation angle and a depression angle (step 2).

The analyzing calculator 109 calculates respective propagation paths used for scan by an ultrasonic propagation analysis method and based on the ultrasonic incident information and the three-dimensional shape data 405 of the inspection object 100 (step 3).

The propagation analysis is called a ray trace analysis and is a well-known method. In this analysis, the shape of the inspection object and the information of material are made parameters, reflection and refraction of the ultrasonic wave are calculated based on geometric optics theory, and the propagation path and propagation time of the ultrasonic wave are obtained.

The propagation path may be obtained from a finite element method, a boundary element method or the like in addition to the ray trace analysis. For example, the temporal change of sound field in the inspection object 100 is obtained by the finite element method, and the waveform data obtained by the phased array system can be reproduced by shifting and adding the temporal changes of the amplitudes at the positions of the respective piezoelectric vibrators 104 at the same timing as that at the time of measurement.

However, since the propagation analysis method has the least amount of calculation, this method is often used if the result is desired to be obtained in a short time. Besides, it is conceivable that the calculation is performed under the assumption that only a longitudinal wave or a transverse wave propagates at the actual analysis. When an ultrasonic wave is obliquely incident on the inspection object surface (boundary surface), mode conversion occurs, and a wave different in vibration mode appears in the reflected wave, for example, a transverse wave is changed to a longitudinal wave or a longitudinal wave is changed to a transverse wave. Accordingly, if all the longitudinal waves and the transverse waves are calculated, it takes much time. Thus, in order to perform the calculation more quickly, it may be assumed that only the longitudinal wave or the transverse wave propagates. In this case, it is necessary that the incident ultrasonic wave has such an incident angle that the longitudinal wave or the transverse wave is selectively transmitted, and inspection is performed.

Here, the longitudinal wave and the transverse wave of the ultrasonic wave used for the inspection will be described in detail. The typical mode of the ultrasonic wave used for inspection includes the longitudinal wave (also called a compressional wave or elastic wave) and the transverse wave (also called a shear wave), and the bending correction of the invention can be applied to both cases. In general, each time the longitudinal wave or the transverse wave is reflected in the inside of the inspection object, part of energy is exchanged from each other and the waves propagate. This is called mode conversion.

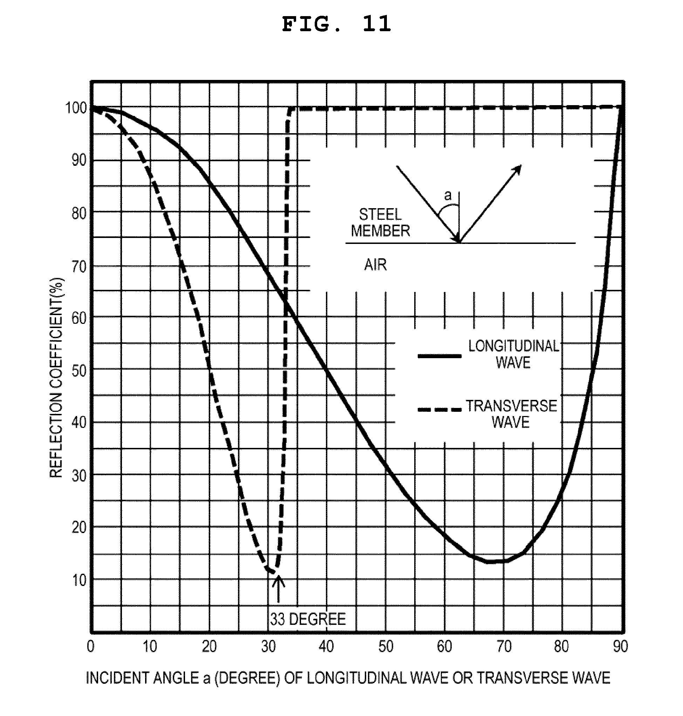

FIG. 11 shows reflection coefficients of a longitudinal wave and a transverse wave in a steel member. For example, the longitudinal wave has a reflection coefficient of less than 100% at an incident angle other than 0 degree. That is, at the reflection, part of energy is converted into the transverse wave. Besides, in a newly generated transverse wave, part of energy is converted into a longitudinal wave at a ratio shown in FIG. 11 at next reflection. However, in the case of the transverse wave, when the incident angle is 33 degrees or more, total reflection (without mode conversion) occurs.

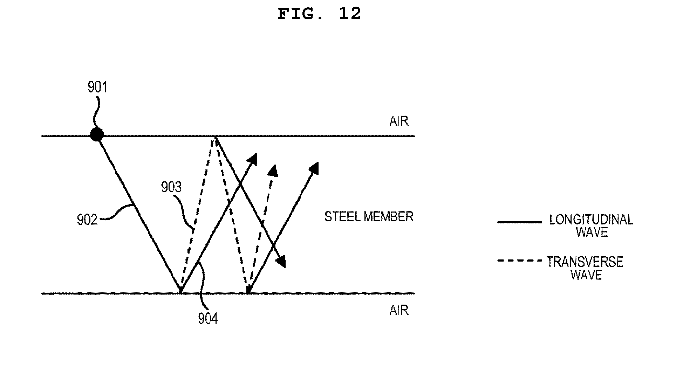

FIG. 12 shows a propagation path of the longitudinal wave and the transverse wave in the steel member. An ultrasonic wave incident as an incident longitudinal wave 902 from an incident point 901 generates a new transverse wave 903 or a longitudinal wave 904 at the reflection. Since a reflection angle of the transverse wave or the longitudinal wave newly generated at the reflection becomes an angle different from the incident angle, as shown in FIG. 12, the propagation path of the ultrasonic wave branches. Although all the branched propagation paths can be traced by the ultrasonic propagation analysis, in the bending correction of the invention, only the propagation path of the mode assumed in the inspection plan is selectively used. By this, the calculation amount of the propagation path analysis and the bending correction is reduced, and the process is speeded up.

Besides, in general, when the inspection plan is formed, since only a propagation path of a specific mode is assumed, three-dimensional inspection data corresponding to the inspection plan can be obtained by the bending correction of the invention. Since the recorded data is the sum of reflected signals of all branched propagation paths, reflected signals at positions other than the assumed propagation path become noise. If these are problematic, the transverse wave having an incident angle of 33 degrees or more on the reflection surface is made incident. By this, the ultrasonic wave transmits as the totally reflected transverse wave, and one propagation path used for the bending correction is determined. Thus, the calculation amount of the propagation path analysis and the bending correction is reduced, the process is speeded up, and the noise is reduced. Actually, the transverse wave having an incident angle within a range of about 40 degrees to about 50 degrees is often used.

On the other hand, in parallel to the ultrasonic propagation analysis, the actually measured waveform data is recorded by the foregoing system and by the array-probe ultrasonic sensor 101 set at the first measurement position (step 4).

Since step 4 can be performed independently of step 2 and step 3, the process may be performed in parallel. Of course, the process may be sequentially performed.

Next, correction taking the bending of the propagation path by the foregoing method into consideration is performed on the respective sampling points of the recorded data (step 5). That is, the correction process is performed so that the recorded data coincides with the spatial coordinates of the bent propagation path.

An interpolation process is performed on the corrected recorded data to generate voxel data (step 7), and it is drawn on the display (step 8). At this time, the voxel data, together with the CAD data (three-dimensional shape data), is displayed, so that the inspector can perform the inspection while grasping the position relation to the shape of the inspection object, and therefore, efficient inspection with higher accuracy can be realized.

Here, it is confirmed whether or not an instruction to terminate the inspection is issued by a button on the screen or the like, and when not issued, the process of step 1 to step 8 is repeated.

The process of step 1 to step 8 can be performed in several seconds or one second or less by the recent development of a calculator, and almost real-time CAD fusion three-dimensional display becomes possible according to the invention.

By the above, the ultrasonic inspection method and the ultrasonic inspection apparatus, in which bending of the propagation path of the inspection object is considered, can be provided. Besides, since the three-dimensional image is displayed, the inspection result is more easily seen than the two-dimensional display, and the efficient inspection with high accuracy is realized.

### Example 2

Next, example 2 of the invention will be described.

In example 1, the processes of step 1 to step 8 are independently repeated. However, in example 2, part of information obtained by the ultrasonic propagation analysis at the first measurement position is used in the ultrasonic propagation analysis at the next measurement position, so that the analysis process is speeded up. Since the structure of the apparatus and the rough flow of the process are almost equal to those of example 1, the description thereof will be omitted. However, since only the content of step 3 of FIG. 7 is different, it will be described in detail.

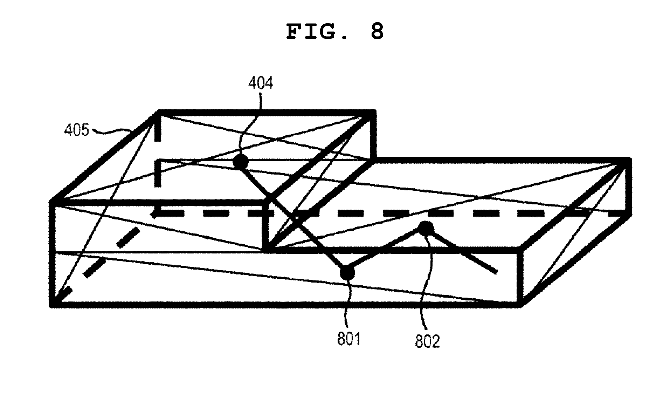

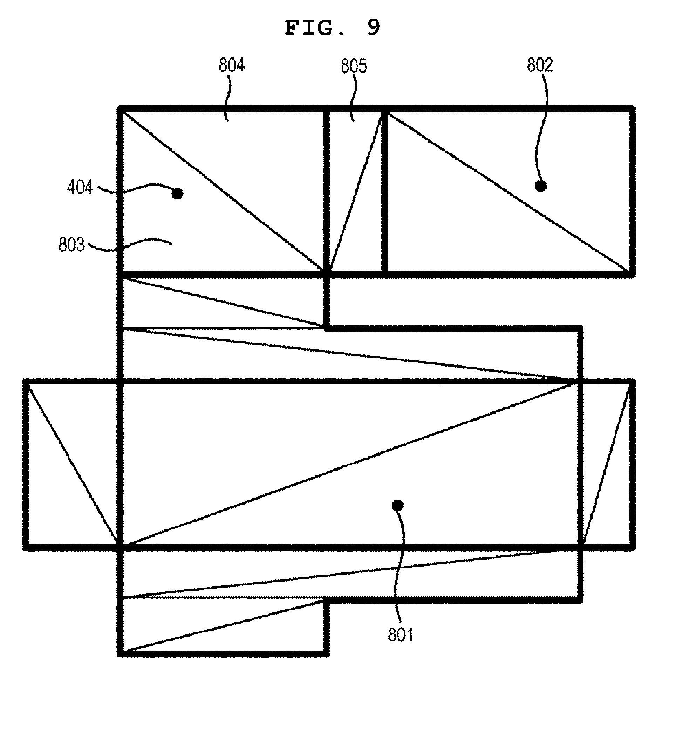

As described above, since three-dimensional shape data 405 is given in STL format, as shown in FIG. 8, the three-dimensional shape data 405 is expressed by a set of many triangles. FIG. 9 is a view in which the three-dimensional shape data 405 is developed so that the data becomes easily viewable. As shown in FIG. 9, the data is expressed by triangles 803, 804, 805, •••. In the ultrasonic propagation analysis, first, a triangle in the three-dimensional shape data 405, on which an ultrasonic incident point 404 exists, is obtained by the repetitive process of the program. The triangle having the coordinates including the incident point is obtained from all the triangles 803, 804, 805, •••. Next, a propagation direction vector in which the ultrasonic wave propagates is obtained from the incident angle of the ultrasonic wave from the sensor position controller, and a triangle (hereinafter referred to as a crossing triangle) crossing the propagation direction vector is obtained by the repetitive process. In this process, the crossing decision is performed for every triangle. That is, the crossing decision is performed for all triangles of triangles 803, 804, 805 •••. When the crossing point is obtained, a crossing point 801 is made a reflection point, and the propagation direction vector of the next propagated ultrasonic wave is obtained. The process is repeated so that the crossing triangle to the propagation direction vector is obtained by the same repetitive process. For example, when there are N triangles, a loop process of triangle number 0 to N-1 is described in the program. Although FIG. 8 shows an example of a relatively simple shape, if the inspection object has a complicated shape, the number of triangles constituting the shape data becomes enormous, and a time required for the repetitive process of the program becomes long, which can not be neglected.

In example 2 of the invention, the crossing triangle obtained by the ultrasonic propagation analysis at the first measurement position is stored, and is used in the next ultrasonic propagation. Thus, a crossing point storage part 115 is provided.

Since the ultrasonic incident point 404 is continuously changed, there is a high possibility that the crossing triangles are the same or are adjacent to each other. Thus, the loop of triangle number 0 to N-1 is not simply repeated, but the crossing decision to the former crossing triangle is first performed, and next, crossing decision to the triangle adjacent thereto is performed. By this, the number of times of repetitive process is greatly reduced, and the ultrasonic propagation analysis at positions after the second measurement position can be performed in a short time.

By this, the ultrasonic inspection method and the ultrasonic inspection apparatus can be realized in which the inner-wall echo and the defect echo can be easily discriminated, and the three-dimensional area of the inspection object can be inspected at high speed while the sensor is moved.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. An ultrasonic inspection method comprising:
calculating an ultrasonic propagation path by using three-dimensional shape data (405) of an inspection object (100) and information relating to a position and a direction of an ultrasonic sensor (101);
giving spatial coordinates along the calculated ultrasonic propagation path to each point of sound field intensity data of an ultrasonic wave received in time series by the ultrasonic sensor (101); and
displaying ultrasonic inspection data obtained by using the sound field intensity data and the spatial coordinates.

2. The ultrasonic inspection method according to claim 1, wherein the ultrasonic inspection data is overlapped with the three-dimensional shape data (405) and is displayed.

3. The ultrasonic inspection method according to claim 2, wherein an image to be displayed after the ultrasonic inspection data is overlapped with the three-dimensional shape data (405) is a three-dimensional image.

4. The ultrasonic inspection method according to at least one of claims 1 to 3, wherein the ultrasonic propagation path is calculated by using an ultrasonic propagation analysis method.

5. The ultrasonic inspection method according to claim 4, wherein in the calculation of the ultrasonic propagation path, a sound ray obtained by the calculation of the ultrasonic propagation analysis method and relative position information of the three-dimensional shape data (405) are used for next calculation using the ultrasonic propagation analysis method.

6. The ultrasonic inspection method according to claim 3, wherein the three-dimensional image is displayed as a three-dimensional image obtained by cutting at a specified arbitrary position.

7. The ultrasonic inspection method according to claim 6, wherein the three-dimensional image, together with a contour line of the three-dimensional shape data (405) obtained by cutting at the arbitrary position, is displayed.

8. An ultrasonic inspection apparatus comprising:
an ultrasonic sensor (101) including a plurality of piezoelectric vibrators (104);
a sensor information supply device to supply information of a position and a direction of the ultrasonic sensor;
a pulsar (102C) to supply transmission signals to the respective piezoelectric vibrators (104) of the ultrasonic sensor (101), a receiver (102D) to input reception signals from the respective piezoelectric vibrators (104) of the ultrasonic sensor (101), a delay control part (102B) to set delay times different for the respective piezoelectric vibrators (104) to the transmission signals and the reception signals, a data recording part (102E) to record sound field intensity data of an ultrasonic wave received by the ultrasonic sensor (101);
an analyzing calculator (109) to calculate an ultrasonic propagation path based on three-dimensional shape data of an inspection object (100) and information relating to a position and a direction of the sensor information supply device;
an image processing calculator to give spatial coordinates along the calculated ultrasonic propagation path to each point of the sound field intensity data of the ultrasonic wave received in time series by the ultrasonic sensor (101) and to generate ultrasonic inspection data obtained by using the sound field intensity data and the spatial coordinates; and
a display part (103) to display the generated ultrasonic inspection data.

9. The ultrasonic inspection apparatus according to claim 8, wherein the image processing calculator causes the ultrasonic inspection data to be overlapped with the three-dimensional shape data (405) and to be displayed.

10. The ultrasonic inspection apparatus according to claims 8 or 9, wherein an image obtained by overlapping the ultrasonic inspection data with the three-dimensional shape data (405) is a three-dimensional image.

11. The ultrasonic inspection apparatus according to at least one of claims 8 to 10, wherein the analyzing calculator (109) calculates the ultrasonic propagation path by using an ultrasonic propagation analysis method.

12. The ultrasonic inspection apparatus according to claim 11, further comprising a storage part (115) to store a sound ray obtained by the calculation of the ultrasonic propagation analysis method and relative position information of the three-dimensional shape data (405), wherein the information of the storage part (115) is used for next calculation using the ultrasonic propagation analysis method.

13. The ultrasonic inspection apparatus according to claim 10, wherein the three-dimensional image is displayed as a three-dimensional image obtained by cutting at a specified arbitrary position.

14. The ultrasonic inspection apparatus according to claim 13, wherein the three-dimensional image, together with a contour line of the three-dimensional shape data (405) obtained by cutting at the arbitrary position, is displayed.
